# EUROPEAN PATENT APPLICATION

(11) **EP 4 826 596 A1**
(43) Date of publication of application: **21.10.2026**
(21) Application number: 26164253.2
(22) Date of filing: 12.03.2026
(51) Int. Cl.: G06N 3/0475

(54) **METHOD AND DEVICE WITH GENERATIVE MODEL PROCESSING**

(30) Priority: 16.04.2025 KR 20250049433; 12.06.2025 KR 20250077369
(71) Applicant: Samsung Electronics Co., Ltd., Suwon-si, Gyeonggi-do 16677 (KR); Ulsan National Institute of Science and Technology (UNIST), Eonyang-eup Ulju-gun Ulsan 44919 (KR)
(72) Inventor: Baek, Woongki, 44919 Ulsan (KR); Kim, Sowoong, 44919 Ulsan (KR); Shin, Youngsam, 16678 Suwon-si, Gyeonggi-do (KR); Cho, Yeongon, 16678 Suwon-si, Gyeonggi-do (KR)
(74) Representative: Grünecker Patent- und Rechtsanwälte PartG mbB

(57) **Abstract**

A processor-implemented method includes determining a task ratio between a first processing group and a second processing group for an inference task of a generative model, generating subtensors by dividing tensors used for the inference task based on communication dependency of computation stages of the inference task, storing the generated subtensors in a first memory pool of the first processing group and in a second memory pool of the second processing group based on the task ratio, and performing the inference task using the stored subtensors by the first processing group and the second processing group.

## Description

### BACKGROUND

### 1. Field

The following description relates to a method and device with generative model processing.

### 2. Description of Related Art

A generative model may be a machine learning model trained to generate new data similar to a given data distribution. For example, deep learning-based generative models such as generative adversarial networks (GANs), variational autoencoders (VAEs), and transformer-based language models may exhibit excellent performance in generating images, voices, and texts. Deep learning-based generative models are typically trained using large datasets and may effectively learn complex patterns and structures that exist in data. Transformer-based generative models may be used in natural language processing and vision-language fields, enabling high-quality text generation and multimodal inference.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is what is claimed in the independent claims. Preferred embodiments are specified in the dependent claims.

In one or more general aspects, a processor-implemented method includes determining a task ratio between a first processing group and a second processing group for an inference task of a generative model, generating subtensors by dividing tensors used for the inference task based on communication dependency of computation stages of the inference task, storing the generated subtensors in a first memory pool of the first processing group and in a second memory pool of the second processing group based on the task ratio, and performing the inference task using the stored subtensors by the first processing group and the second processing group.

The determining of the task ratio between the first processing group and the second processing group may include determining the task ratio based on processing performance of the first processing group and the second processing group.

The generative model may include an attention sublayer and a multi-layer perceptron (MLP) sublayer, and the task ratio may include a first task ratio between the first processing group and the second processing group for a task corresponding to the attention sublayer, and a second task ratio between the first processing group and the second processing group for a task corresponding to the MLP sublayer.

The generating of the subtensors may include generating first subtensors among the subtensors by dividing first tensors among the tensors according to an attention head dimension representing a dimension of a head direction of multi-head attention of the generative model, and generating second subtensors among the subtensors by dividing second tensors among the tensors according to a dimension of a column direction among a dimension of a row direction and the dimension of the column direction of the second tensors.

The first tensors may include any one or any combination of any two or more of a query weight, a key weight, a value weight, a key tensor sequence, and a value tensor sequence of an attention sublayer of the generative model, and the second tensors comprise either one or both of an output weight of the attention sublayer and a weight of a multi-layer perceptron (MLP) sublayer of the generative model.

The task ratio may include a first task ratio between the first processing group and the second processing group for a task corresponding to the attention sublayer of the generative model, and a second task ratio between the first processing group and the second processing group for a task corresponding to a multi-layer perceptron (MLP) sublayer of the generative model, and the storing of the subtensors in the first memory pool and the second memory pool may include storing the first subtensors in the first memory pool and the second memory pool by dividing the first subtensors according to the first task ratio, and storing the second subtensors in the first memory pool and the second memory pool by dividing the second subtensors according to the second task ratio.

The storing of the subtensors in the first memory pool and the second memory pool may include storing a subtensor to be processed by a first processor among a plurality of first processors of the first processing group in a first memory node positioned in a local area of the first processor among a plurality of first memory nodes of the first memory pool.

The first memory pool may include a memory node having a first bandwidth and a memory node having a second bandwidth, and the storing of the subtensors in the first memory pool and the second memory pool may include storing the subtensors in the memory node having the first bandwidth and the memory node having the second bandwidth based on a ratio between the first bandwidth and the second bandwidth.

The storing of the subtensors in the first memory pool and the second memory pool may include storing the subtensors in the first memory pool in a unit of tiles smaller than pages.

The performing of the inference task may include generating an attention output tensor of a current attention sublayer by processing the current attention sublayer of the generative model, and generating a multi-layer perceptron (MLP) output tensor of a current MLP sublayer by processing the current MLP sublayer of the generative model based on the attention output tensor of the current attention sublayer.

The generating of the attention output tensor of the current attention sublayer may include independently generating a first partial MLP output tensor and a second partial MLP output tensor of a previous MLP sublayer of the generative model by the first processing group and the second processing group without communication between the first processing group and the second processing group, generating an attention input tensor of the current attention sublayer of the generative model by merging the first partial MLP output tensor and the second partial MLP output tensor by the first processing group and the second processing group based on the communication between the first processing group and the second processing group, and independently generating a first partial attention score tensor and a second partial attention score tensor of the current attention sublayer based on the attention input tensor and first subtensors by the first processing group and the second processing group without communication between the first processing group and the second processing group.

The first subtensors may be generated by dividing first tensors among the tensors according to an attention head dimension representing a dimension of a head direction of multi-head attention of the generative model.

The method may include generating an attention score tensor of the current attention sublayer by merging the first partial attention score tensor and the second partial attention score tensor by the first processing group and the second processing group based on the communication between the first processing group and the second processing group, and independently generating a first partial attention output tensor and a second partial attention output tensor of the current attention sublayer based on the attention score tensor and second subtensors by the first processing group and the second processing group without communication between the first processing group and the second processing group.

The second subtensors may be generated by dividing second tensors among the tensors according to a dimension of a column direction among a dimension of a row direction and the dimension of the column direction of the second tensors.

In one or more general aspects, an electronic device includes one or more processors comprising processing circuitry, and memory comprising one or more storage media storing instructions that, when executed individually or collectively by the one or more processors, cause the electronic device to determine a task ratio between a first processing group and a second processing group for an inference task of a generative model, generate subtensors by dividing tensors used for the inference task based on communication dependency of computation stages of the inference task, store the generated subtensors in a first memory pool of the first processing group and in a second memory pool of the second processing group based on the task ratio, and perform the inference task using the subtensors by the first processing group and the second processing group.

For the generating of the subtensors, the execution of the instructions may cause the electronic device to generate first subtensors among the subtensors by dividing first tensors among the tensors according to an attention head dimension representing a dimension of a head direction of multi-head attention of the generative model, and generate second subtensors among the subtensors by dividing second tensors among the tensors according to a dimension of a column direction among a dimension of a row direction and the dimension of the column direction of the second tensors.

The task ratio may include a first task ratio between the first processing group and the second processing group for a task related to the attention sublayer of the generative model, and a second task ratio between the first processing group and the second processing group for a task related to a multi-layer perceptron (MLP) sublayer of the generative model, and for the storing of the subtensors in the first memory pool and the second memory pool, the execution of the instructions may cause the electronic device to store the first subtensors in the first memory pool and the second memory pool by dividing the first subtensors according to the first task ratio, and store the second subtensors in the first memory pool and the second memory pool by dividing the second subtensors according to the second task ratio.

For the placing storing of the subtensors in the first memory pool and the second memory pool, the execution of the instructions may cause the electronic device to store a subtensor to be processed by a first processor among a plurality of first processors of the first processing group in a first memory node positioned in a local area of the first processor among a plurality of first memory nodes of the first memory pool.

The first memory pool may include a memory node having a first bandwidth and a memory node having a second bandwidth, and for the storing of the subtensors in the first memory pool and the second memory pool, the execution of the instructions may cause the electronic device to store the subtensors in the memory node having the first bandwidth and the memory node having the second bandwidth based on a ratio between the first bandwidth and the second bandwidth.

In one or more general aspects, a processor-implemented method includes generating first subtensors by dividing first tensors based on a dimension of a head direction of multi-head attention of a generative model, and storing the first subtensors in a first memory pool and a second memory pool based on a first task ratio, generating second subtensors by dividing second tensors based on a dimension of a column direction of the second tensors, and storing the second subtensors in the first memory pool and the second memory pool based on a second task ratio, and performing an inference task by processing the first subtensors and the second subtensors stored in the first memory pool using a first processing group and processing the first subtensors and the second subtensors stored in the second memory pool using a second processing group.

Other features and aspects will be apparent from the following detailed description, the drawings, and the claims.

### BRIEF DESCRIPTION OF THE DRAWINGS

FIG. 1 illustrates an example of a processing configuration of an electronic device for executing a generative model according to one or more embodiments.
FIG. 2 illustrates an example of an inference operation of a generative model according to one or more embodiments.
FIG. 3 illustrates an example of a configuration of a transformer layer according to one or more embodiments.
FIG. 4 illustrates an example of an operation of performing an inference task of a generative model using a multi-processing group according to one or more embodiments.
FIG. 5 illustrates an example of a task ratio between a first processing group and a second processing group according to one or more embodiments.
FIG. 6 illustrates an example of subtensors divided according to an attention head dimension according to one or more embodiments.
FIG. 7 illustrates an example of subtensors divided according to a dimension of a column direction according to one or more embodiments.
FIG. 8 illustrates an example of a processing structure of a first processing group according to one or more embodiments.
FIG. 9 illustrates an example of an operation of placing a subtensor in heterogeneous memory pools according to one or more embodiments.
FIG. 10A illustrates an example of a process in which an attention sublayer is processed by a first processing group according to one or more embodiments.
FIG. 10B illustrates an example of a process in which an attention sublayer is processed by a second processing group according to one or more embodiments.
FIG. 10C illustrates an example of a process in which a multi-layer perceptron (MLP) sublayer is processed by a first processing group according to one or more embodiments.
FIG. 10D illustrates an example of a process in which an MLP sublayer is processed by a second processing group according to one or more embodiments.
FIG. 11 illustrates an example of a configuration of an electronic device according to one or more embodiments.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C" (e.g., each phrase may include any one of the respective items alone, all of the items listed together, and all possible combinations thereof), and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Unless otherwise defined, all terms, including technical and scientific terms, used herein have the same meaning as commonly understood by one of ordinary skill in the art to which this disclosure pertains and specifically in the context on an understanding of the present disclosure. Terms, such as those defined in commonly used dictionaries, are to be interpreted as having a meaning that is consistent with their meaning in the context of and specifically in the context of the present disclosure, and are not to be construed to have an ideal or excessively formal meaning unless otherwise defined herein.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example", "embodiment", and "example embodiment" herein have a same meaning (e.g., the phrasing 'in an or one example' has a same meaning as 'in an or one embodiment" and 'in an or one example embodiment'), and "one or more examples" has a same meaning as "one or more embodiments" and "one or more example embodiments". Still further, each of multiple or all separately described an/one "example", "embodiment", "example embodiment", as well as "examples", "embodiments", "example embodiments", herein may be included, in combination, in a same embodiment in any combination.

Hereinafter, examples will be described in detail with reference to the accompanying drawings. When describing the examples with reference to the accompanying drawings, like reference numerals refer to like elements and a repeated description related thereto will be omitted.

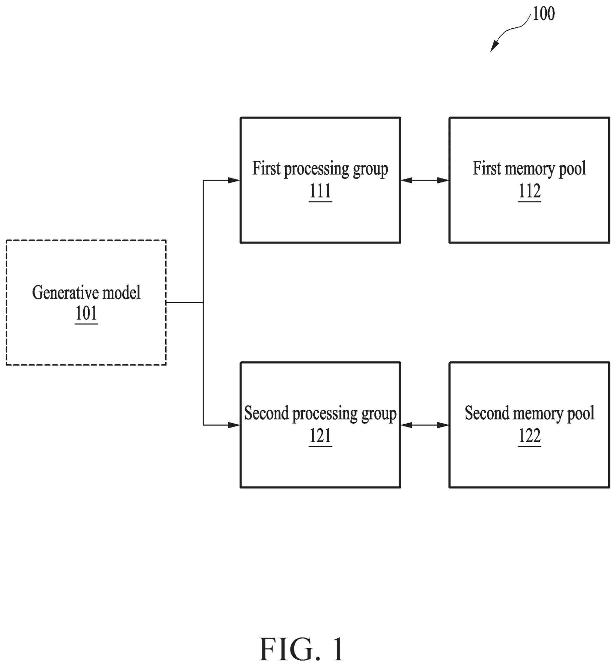

FIG. 1 illustrates an example of a processing configuration of an electronic device for executing a generative model according to one or more embodiments. Referring to FIG. 1, an electronic device 100 may include a first processing group 111, a first memory pool 112, a second processing group 121, and a second memory pool 122.

The first processing group 111 may include one or more first processors. The first processing group 111 may be a main processing group of the electronic device 100, and the first processor may be a main processor of the electronic device 100. For example, the first processor may be, but is not limited to, a central processing unit (CPU).

The first memory pool 112 may include one or more memories. The first memory pool 112 may include heterogeneous memories. The heterogeneous memories may be memories of different tiers. The heterogeneous memories may be connected to the first processor with different interfaces and/or may have different bandwidths. For example, the first memory pool 112 may include one or more main memories and one or more extended memories. The extended memory may be an external memory. According to an example, the first memory pool 112 (e.g., the extended memory) may include a near memory processing unit (NMPU) that provides an operation function.

For example, the main memory may include a dynamic random access memory (DRAM), and the extended memory may include a compute express link memory (CXL memory), but examples are not limited thereto. The main memory (e.g., the DRAM) may have a wide bandwidth to the extended memory (e.g., the CXL memory). The main memory (e.g., the DRAM) may be connected to the first processor (e.g., the CPU) via a double data rate (DDR) interface, and the extended memory (e.g., the CXL memory) may be connected to the first processor (e.g., the CPU) via a peripheral component interconnect-express (PCI-e), but examples are not limited thereto.

The second processing group 121 may include one or more second processors. The second processing group 121 may be a co-processing group of the electronic device 100, and the second processor may be a co-processor of the electronic device 100. For example, the second processor may include one or more of a graphic processing unit (GPU), an neural processing unit (NPU), and a tensor processing unit (TPU), but is not limited thereto.

The second memory pool 122 may include one or more memories. For example, the second memory pool 122 may include, but is not limited to, a high bandwidth memory (HBM). The second processing group 121 may have a structure that is effective for parallel processing of a neural network model (e.g., a generative model 101). The second memory pool 122 may maximize the parallel processing performance of the second processing group 121 with a wide bandwidth.

A memory size of the second memory pool 122 may not be sufficient to store the generative model 101. According to an example, the electronic device 100 of one or more embodiments may effectively perform an inference task of the generative model 101 by using cooperative processing of the first processing group 111 and the second processing group 121. According to an example, based on an optimization goal of a workload for generative inference, the first processing group 111 and the second processing group 121 may perform cooperative processing.

According to an example, the electronic device 100 may derive an optimal task ratio of the first processing group 111 and the second processing group 121 for the inference task of the generative model 101 based on the processing performance of the first processing group 111 and the second processing group 121 and/or the memory size of the second memory pool 122. The electronic device 100 of one or more embodiments may divide tensors (e.g., a weight and a tensor sequence related to a key value (KV) cache) used for the inference task into subtensors, thereby minimizing a communication overhead between the first processing group 111 and the second processing group 121 when processing the subtensors, and place the subtensors in the first memory pool 112 and the second memory pool 122 based on the task ratio. Herein, to "place" a tensor or subtensor in a storage medium (e.g., a memory, a memory pool, and/or a memory node) or a processing group may mean to store the tensor or subtensor in the storage medium or a storage medium corresponding to the processing group. The electronic device may perform fine-grained placement of the subtensors based on locality and/or heterogeneity. The electronic device may process the inference task allocated to the first processing group 111 and the second processing group 121 in parallel using the first processing group 111 and the second processing group 121.

According to an example, the electronic device 100 may perform generative inference while interacting with a user. A workload of the generative inference may satisfy quality of a service (QoS) target, for example, to improve user experience. According to an example, the electronic device 100 may perform the generative inference such that a throughput is maximized while satisfying the QoS target.

For example, the QoS may be determined based on latency. According to an example, an average token generation time (ATGT), which represents an average execution time of each decoding stage of the generative model 101, may be used as a latency metric. ATGT may be represented by Equation 1 below, for example. $ATGT = \frac{{t}_{decoding}}{o - 1}$ Equation 1

In Equation 1, t_{decoding} represents the execution time of a decoding stage, and o may represent the number of output tokens. A single output token may be generated in a prefill stage.

To maximize the throughput of the generative inference workload while satisfying the QoS target, increasing block and batch sizes may be limited. The size of the tensor sequence related to the KV cache may be proportional to the block and batch sizes, and accordingly, a communication overhead between the first processing group 111 and the second processing group 121 per tensor sequence may be constant. For example, the size of the weight may be constant. In this case, the communication overhead for the weight per tensor sequence may increase as the number of tensor sequences decreases due to constraints on the block and batch sizes. Therefore, the communication overhead for the weight may become a performance bottleneck. According to an example, the electronic device 100 of one or more embodiments may reduce the communication overhead for the weight by offloading operations performed with weights to the first processing group.

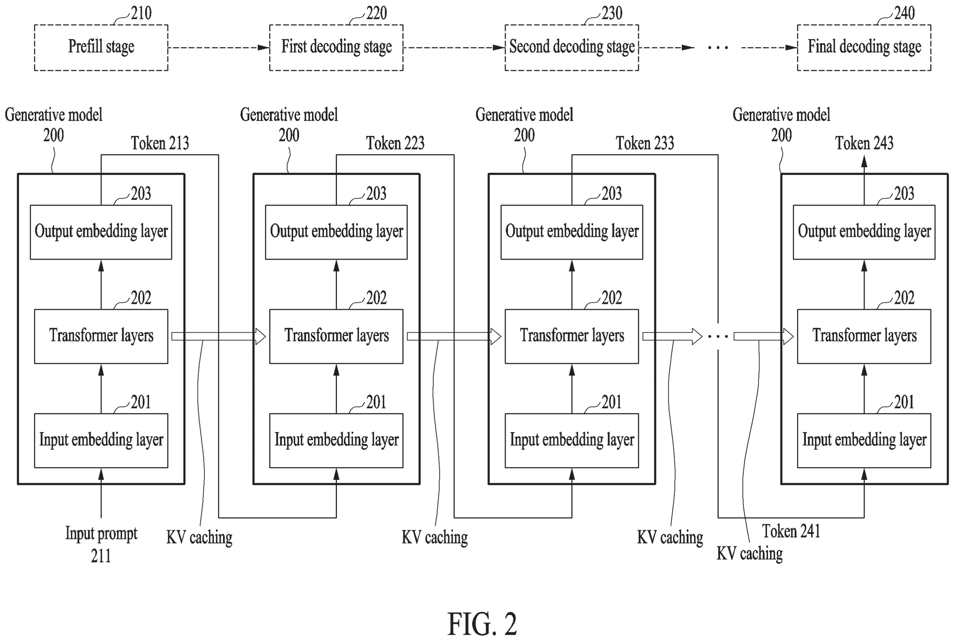

FIG. 2 illustrates an example of an inference operation of a generative model according to one or more embodiments. Referring to FIG. 2, a generative model 200 may include an input embedding layer 201, transformer layers 202, and an output embedding layer 203. The generative model 200 may receive an input prompt 211, and generate tokens 213, 223, 233, 241, and 243 through a prefill stage 210, a first decoding stage 220, a second decoding stage 230, and a final decoding stage 240. An inference result corresponding to the input prompt 211 may be generated based on the token 243 in the final decoding stage 240.

The input prompt 211 may be data in various formats such as a text, a voice, an image, a video, and the like. For example, the input prompt 211 may be a query or a request of the user, and the inference result may be a response to the query or the request.

The input embedding layer 201 may perform embedding and/or positional encoding on input data. The input data may be the input prompt 211 or the tokens 213, 223, 233, and 241. The input data in the prefill stage 210 may be the input prompt 211, and the input data in the first decoding stage 220 to the final decoding stage 240 may be the tokens 213, 223, 233, and 241. Depending on the embedding of the input data, the format of the input data may be converted into a format (e.g., an input tensor) that may be processed by the transformer layers 202. Through the positional encoding on the input data, temporal and/or spatial relationships between elements of the input data (e.g., words in a text, tiles in an image, and the like) may be defined. For example, the input embedding layer 201 may add position information to the input data.

The transformer layers 202 may perform an attention mechanism. For example, the attention mechanism may include, but is not limited to, self-attention. For example, an input tensor may be input to each of the transformer layers 202 from the input embedding layer 201. Each of the transformer layers 202 may perform an attention mechanism on each input tensor to generate an output tensor. When the transformer layers 202 include a first transformer layer and a second transformer layer, and the second transformer layer is a next layer of the first transformer layer, an output tensor of the first transformer layer may be an input tensor of the second transformer layer.

Each of the transformer layers 202 may include a query weight, a key weight, and a value weight. Each of the transformer layers 202 may perform the attention mechanism by applying the query weight, the key weight, and the value weight to the input tensor. An attention result may be generated based on the attention mechanism, and the output tensor may be generated based on the attention result. The number of the transformer layers 202 may be N, but is not limited thereto.

The output embedding layer 203 may transform the output tensor of the transformer layers 202 into the tokens 213, 223, 233, and 243. The output embedding layer 203 may operate in the opposite manner to the input embedding layer 201. For example, the output embedding layer 203 may perform inverse transformation of the format of the input embedding layer 201 and/or the removal of position information.

The inference operation may be performed through the prefill stage 210, the first decoding stage 220, the second decoding stage 230, and the final decoding stage 240 of the generative model 200. The input prompt 211 may include a plurality of tokens. In the prefill stage 210, the generative model 200 may analyze the correlation between the tokens of the input prompt 211 based on the attention mechanism. In the first decoding stage 220, the second decoding stage 230, and the final decoding stage 240, the generative model 200 may generate the tokens 223, 233, and 243 based on the attention mechanism. The number of decoding stages may be M, but is not limited thereto. An index i may be used to identify the decoding stages 220 to 240. For example, the index of the final decoding stage 240 may be i = M.

According to examples, when executing the transformer layers 202, KV caching may be performed. As the decoding stages 220 to 240 proceeds, redundant operations may occur when obtaining (e.g., generating) a key tensor and a value tensor. The KV caching is a technique for caching key tensor sequences and value tensor sequences to prevent redundant operations. A sequence may represent a data format in which tensors are connected to each other (e.g., concatenation). For example, a sequence may be formed by adding a second tensor to a first tensor. Key tensors may form a key tensor sequence, and value tensors may form a value tensor sequence. Caching may refer to an operation of storing a sequence.

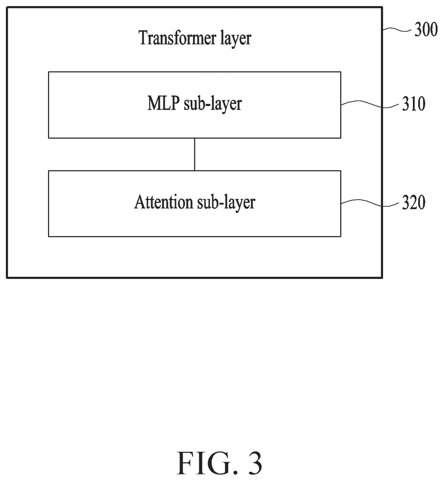

FIG. 3 illustrates an example of a configuration of a transformer layer according to one or more embodiments. Transformer layers (e.g., the transformer layers 202 of FIG. 2) of a generative model may each be configured as a transformer layer 300 of FIG. 3. Referring to FIG. 3, the transformer layer 300 may include, but is not limited to, a multi-layer perceptron (MLP) sublayer 310 and an attention sublayer 320. The attention mechanism of the transformer layer 300 may be performed in the attention sublayer 320, but is not limited thereto.

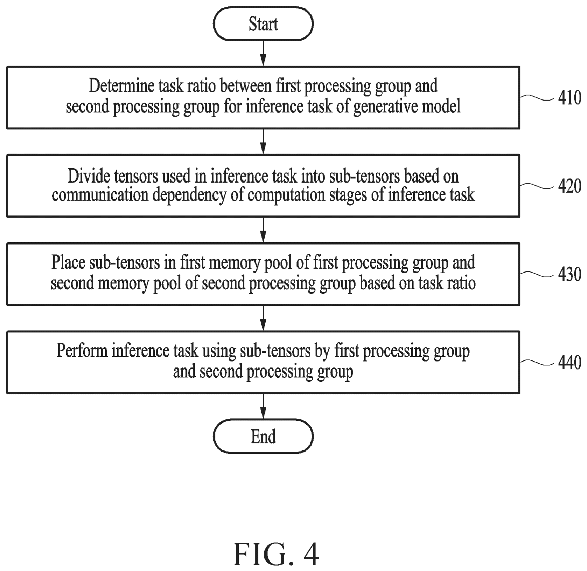

FIG. 4 illustrates an example of an operation of performing an inference task of a generative model using a multi-processing group according to one or more embodiments. Although operations 410 to 440 of FIG. 4 are illustrated as being performed sequentially, one or more of the operations may be performed in a different order, one or more of the operations may be omitted, two or more of the operations may be performed in parallel or simultaneously, and/or other operations may be additionally performed without departing from the scope of the described embodiments.

Referring to FIG. 4, in operation 410, the electronic device may determine a task ratio between a first processing group and a second processing group for the inference task of the generative model. For example, the electronic device may determine the task ratio based on the processing performance of the first processing group and the second processing group, but is not limited thereto. According to an example, the electronic device may experimentally determine the processing performance. In this case, the electronic device may measure the processing performance of the first processing group and the second processing group based on a microbenchmark of one or more layers (e.g., one transformer layer) of the generative model, but is not limited thereto. For example, the electronic device may measure the processing performance assuming maximum usage of a second memory pool of the second processing group, but is not limited thereto. The electronic device may determine the task ratio to obtain maximum performance (e.g., maximum throughput).

According to an example, the electronic device may receive and use data with pre-measured processing performance. For example, performance data for obtaining the maximum performance (e.g., maximum throughput) may be provided to the electronic device.

According to an example, the generative model may include an attention sublayer and an MLP sublayer. For example, the generative model may include a transformer layer, and the transformer layer may include the attention sublayer and the MLP sublayer. According to an example, the task ratio may include a first task ratio (e.g., r_{SA,C}, r_{SA,G}) between the first processing group and the second processing group for a task related to the attention sublayer, and a second task ratio (e.g., r_{MLP,C}, r_{MLP,G}) between the first processing group and the second processing group for a task related to the MLP sublayer. For example, the first task ratio between the first processing group and the second processing group may be represented as r_{SA,C}:r_{SA,G}, and the second task ratio between the first processing group and the second processing group may be represented as r_{MLP,C}:r_{MLP,G}.

In operation 420, the electronic device may divide tensors used in the inference task into subtensors based on communication dependency of computation stages of the inference task. Communication dependency may indicate whether the communication between the first processing group and the second processing group is to be performed (e.g., is required) to obtain a processing result of a previous computation stage used for the processing of each computation stage.

For example, the inference task may include computation stages related to the attention sublayer and computation stages related to the MLP sublayer. The computation stages may be performed sequentially. When the communication between the first processing group and the second processing group is performed to obtain the processing result of a previous computation stage used for the processing of a current computation stage, it may be determined that the current computation stage has the communication dependency. According to an example, when the current computation stage has the communication dependency, the first processing group and the second processing group may process the current stage without tensor dividing. When the current computation stage has the communication dependency, tensors may be divided into subtensors, and the first processing group and the second processing group may independently process the current stage using subtensors allocated to the first processing group and the second processing group.

For example, the tensors may include a weight and/or a tensor sequence. For example, the weight may include a query weight, a key weight, a value weight, and an output weight of the attention sublayer, and a weight of the MLP sublayer. The tensor sequence may include a key tensor sequence and a value tensor sequence of the attention sublayer. The electronic device may determine first subtensors among the subtensors by dividing first tensors among the tensors according to an attention head dimension representing a dimension of a head direction of multi-head attention of the generative model, and determine second subtensors among the subtensors by dividing second tensors among the tensors according to a dimension of a column direction among a dimension of a row direction and the dimension of the column direction of the second tensors. The first tensors may include one or more of a query weight, a key weight, a value weight, a key tensor sequence, and a value tensor sequence of the attention sublayer, and the second tensors may include one or more of an output weight of the attention sublayer and a weight of an MLP sublayer of the generative model.

In operation 430, the electronic device may place (e.g., store) the subtensors in a first memory pool of the first processing group and a second memory pool of the second processing group based on the task ratio. For example, the electronic device may place the first subtensors in the first memory pool and the second memory pool by dividing the first subtensors according to the first task ratio, and place the second subtensors in the first memory pool and the second memory pool by dividing the second subtensors according to the second task ratio.

According to an example, the first memory pool may include a memory node having a first bandwidth and a memory node having a second bandwidth. For example, the memory node having the first bandwidth may be a main memory node (e.g., a DRAM memory node), and the memory node having the second bandwidth may be an extended memory node (e.g., a CXL memory node), but the memory nodes are not limited thereto. The electronic device may place the subtensors in the memory node having the first bandwidth and the memory node having the second bandwidth based on a ratio between the first bandwidth and the second bandwidth. For example, when the ratio between the first bandwidth and the second bandwidth is β_{SNC}:β_{CXL}, the electronic device may place the subtensors in the memory node having the first bandwidth and the memory node having the second bandwidth at the ratio of β_{SNC}:β_{CXL}. The electronic device may place the subtensors in the first memory pool in a unit of tiles smaller than pages. For example, a page may be 4 kilobytes (KB) in size, and a tile unit may be 1 KB, but examples are not limited thereto.

In operation 440, the electronic device may perform an inference task using the subtensors by the first processing group and the second processing group. The inference task may be processed in parallel by the first processing group and the second processing group.

For example, the electronic device may process a current attention sublayer to generate an attention output tensor of the current attention sublayer, and process a current MLP sublayer of the generative model based on the attention output tensor of the current attention sublayer to generate an MLP output tensor of the current MLP sublayer. The generative model may include a plurality of transformer layers, and each transformer layer may include an attention sublayer and an MLP sublayer. The electronic device may process the plurality of transformer layers sequentially. For example, the electronic device may sequentially process the attention sublayer and the MLP sublayer of each transformer layer. For example, the electronic device may process a previous attention sublayer and a previous MLP sublayer of a previous transformer layer, and in response to processing the previous attention sublayer and the previous MLP sublayer, process a current attention sublayer and a current MLP sublayer of a current transformer layer.

The electronic device may independently generate a first partial MLP output tensor and a second partial MLP output tensor of a previous MLP sublayer of the generative model by the first processing group and the second processing group without communication between the first processing group and the second processing group, generate an attention input tensor of the current attention sublayer of the generative model by merging the first partial MLP output tensor and the second partial MLP output tensor by the first processing group and the second processing group based on the communication between the first processing group and the second processing group, and independently generate a first partial attention score tensor and a second partial attention score tensor of the current attention sublayer based on the attention input tensor and first subtensors by the first processing group and the second processing group without communication between the first processing group and the second processing group. The first subtensors may be obtained by dividing first tensors among the tensors according to an attention head dimension representing a dimension of a head direction of multi-head attention of the generative model.

The electronic device may generate an attention score tensor of the current attention sublayer by merging the first partial attention score tensor and the second partial attention score tensor by the first processing group and the second processing group based on the communication between the first processing group and the second processing group, and independently generate a first partial attention output tensor and a second partial attention output tensor of the current attention sublayer based on the attention score tensor and second subtensors by the first processing group and the second processing group without communication between the first processing group and the second processing group. The second subtensors may be obtained by dividing second tensors among the tensors according to a dimension of a column direction among a dimension of a row direction and the dimension of the column direction of the second tensors.

An example of the processing process of the attention sublayer and the MLP sublayer will be described in more detail later.

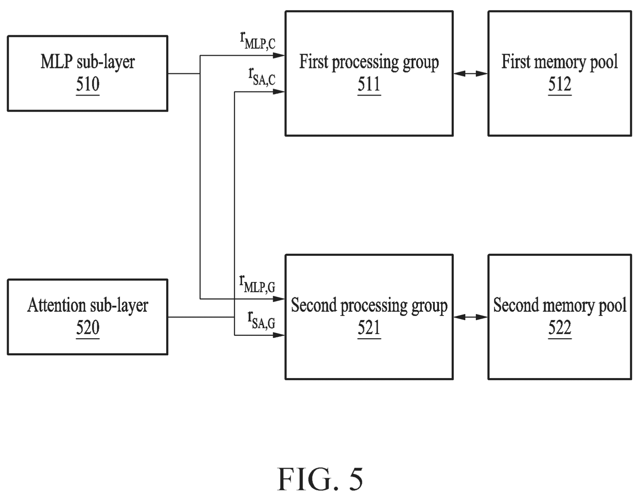

FIG. 5 illustrates an example of a task ratio between a first processing group and a second processing group according to one or more embodiments. Referring to FIG. 5, an electronic device (e.g., the electronic device 100) may include a first processing group 511, a first memory pool 512, a second processing group 521, and a second memory pool 522. Referring to FIG. 5, the electronic device may include a first task ratio (e.g., r_{SA,C}, r_{SA,G}) between the first processing group 511 and the second processing group 521 for a task related to an attention sublayer 520, and a second task ratio (e.g., r_{MLP,C}, r_{MLP,G}) between the first processing group 511 and the second processing group 521 for a task related to an MLP sublayer 510. For example, the first task ratio between the first processing group 511 and the second processing group 521 may be represented as r_{SA,C}:r_{SA,G}, and the second task ratio between the first processing group 511 and the second processing group 521 may be represented as r_{MLP,C}:r_{MLP,G}.

The electronic device may derive a task ratio for an inference task based on the processing performance of the first processing group 511 and the second processing group 521 and/or the memory size of the second memory pool 522. For example, the electronic device may determine the task ratio based on the processing performance of the first processing group 511 and the second processing group 521, but is not limited thereto. For example, the processing performance may be determined experimentally. The electronic device may measure the processing performance of the first processing group 511 and the second processing group 521 based on a microbenchmark of one or more layers (e.g., one transformer layer) of the generative model. For example, the electronic device may measure the processing performance assuming maximum usage of the second memory pool 522 of the second processing group 521, but is not limited thereto. In another example, the electronic device may use data with pre-measured processing performance.

Regarding the task ratio, the relationships of Equations 2 and 3 below, for example, may be satisfied. ${r}_{SA , G} + {r}_{SA , C} = 1$ Equation 2 ${r}_{MLP , G} + {r}_{MLP , C} = 1$ Equation 3

Generative inference may show characteristics that are highly dependent on a memory bandwidth. According to an example, a second processor of the second processing group 521 may include a GPU, and the second memory pool 522 may include an HBM, but examples are not limited thereto. In this case, when the second processing group 521 has a higher memory bandwidth than the first processing group 511, the electronic device may use the second memory pool 522 to the maximum in order to satisfy a QoS target of a generative inference workload and maximize the throughput. Regarding the use of the second memory pool 522, conditions as shown in Equation 4 below, for example, may be defined. Equation 4: ${r}_{SA , G} ⋅ {s}_{SA} + {r}_{MLP , G} ⋅ {s}_{MLP} = {m}_{G}$

In Equation 4, s_{SA} may represent a size of a weight and a KV cache-related tensor sequence of all attention sublayers of the generative model, s_{MLP} may represent a size of a weight of all MLP sublayers of the generative model, and m_{G} may represent a size of the second memory pool 522.

r_{SA,C}, r_{SA,G}, r_{MLP,C}, and r_{MLP,G} may be variables, and s_{SA}, s_{MLP}, and m_{G} may be constants. The three linear equations in Equations 2 to 4 may represent constraints based on four variables (e.g., r_{SA,C}, r_{SA,G}, r_{MLP,C}, and r_{MLP,G}). When a single variable value in Equations 2 to 4 is determined, the remaining variable values may be derived. The electronic device may experimentally derive a single variable value or may use a single predetermined variable value, but examples are not limited thereto. For example, the electronic device may measure the processing performance of the first processing group and the second processing group based on a microbenchmark of one or more layers (e.g., one transformer layer) of the generative model. For example, the electronic device may perform the microbenchmark based on an optimization technique (e.g., binary search), but is not limited thereto.

The electronic device may determine a batch size and one variable value that maximize throughput while satisfying the QoS target. For example, the electronic device may experimentally determine r_{SA,G}, and in response to experimentally determining r_{SA,G}, determine r_{SA,C}, r_{MLP,C}, and r_{MLP,G} using Equations 2 and 3.

The electronic device may derive an execution time (e.g., t_{decoding}) of a decoding stage of the generative inference workload based on the number of layers, a sequence length, and a layer execution time of the decoding stage measured by microbenchmark. The electronic device may search a maximum batch size that satisfies the QoS target based on the microbenchmark. For example, the electronic device may perform the microbenchmark based on an optimization technique (e.g., binary search), but is not limited thereto. The electronic device may derive a task ratio (e.g., r_{SA,C}, r_{SA,G}, r_{MLP,C}, and r_{MLP,G}) that represents the maximum throughput while satisfying the QoS among one variable value (e.g., r_{SA,G}) that may be set for the maximum batch size.

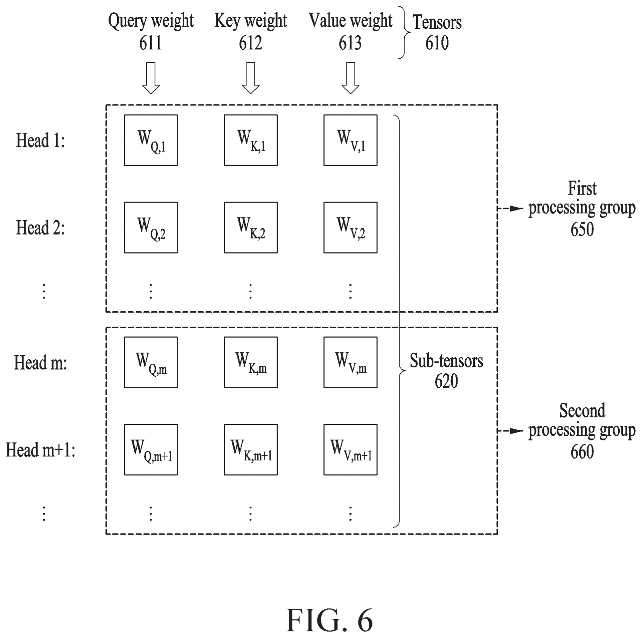

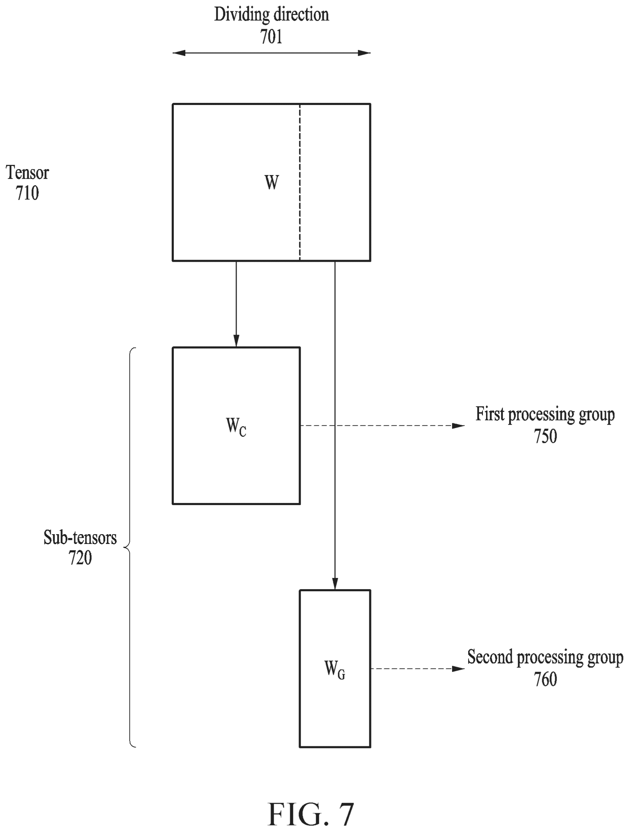

FIG. 6 illustrates an example of subtensors divided according to an attention head dimension according to one or more embodiments, and FIG. 7 illustrates an example of subtensors divided according to a dimension of a column direction according to one or more embodiments.

The electronic device of one or more embodiments may divide the tensors into subtensors, thereby minimizing the communication between the first processing group and the second processing group when processing the subtensors, and distribute the subtensors to the first memory pool of the first processing group and the second memory pool of the second processing group according to the derived task ratio. For example, the tensors may include a weight and/or a tensor sequence. For example, the weight may include a query weight, a key weight, a value weight, and an output weight of the attention sublayer, and a weight of the **MLP** sublayer. The tensor sequence may include a key tensor sequence and a value tensor sequence of the attention sublayer.

The electronic device may determine first subtensors among the subtensors by dividing first tensors among the tensors according to an attention head dimension representing a dimension of a head direction of multi-head attention of the generative model, and determine second subtensors among the subtensors by dividing second tensors among the tensors according to a dimension of a column direction among a dimension of a row direction and the dimension of the column direction of the second tensors. The first tensors may include one or more of a query weight, a key weight, a value weight, a key tensor sequence, and a value tensor sequence of the attention sublayer, and the second tensors may include one or more of an output weight of the attention sublayer and a weight of an **MLP** sublayer of the generative model.

According to an example, the electronic device may divide the tensors used in the inference task into the subtensors based on communication dependency of computation stages of the inference task. Communication dependency may indicate whether the communication between the first processing group and the second processing group is to be performed to obtain a processing result of a previous computation stage used for the processing of each computation stage. For example, the inference task may include computation stages related to the attention sublayer and computation stages related to the **MLP** sublayer. The computation stages may be performed sequentially.

When the communication between the first processing group and the second processing group is to be performed to obtain the processing result of a previous computation stage used for the processing of a current computation stage, it may be determined that the current computation stage has the communication dependency. According to an example, when the current computation stage has the communication dependency, the first processing group and the second processing group may process the current stage without tensor dividing. When the current computation stage has the communication dependency, the tensors may be divided into subtensors, and the first processing group and the second processing group may process a current stage using the subtensors.

Table 1 below, for example, may show computation stages related to the attention sublayer and Table 2 below, for example, may show computation stages related to the **MLP** sublayer.

**Table 1:**

| **Equation** | **Bytes transferred** | |
|---|---|---|
| *T*_{*SA,*input} = gather(*T*_{*MLP*,output}) | 2 *· b · h*₁ | (4a) |
| *T*_{*SA*,1} = normalize(T_{*SA,*input}) | 0 | (4b) |
| *T_{Q} = T*_{*SA,*1} · *W_{Q}* | 0 | (4c) |
| *T_{K}* = *T_{S A,1}* · *W_{K}* | 0 | (4d) |
| *X_{K}* ← concat(*X_{K}*, *T_{K}*) | 0 | (4e) |
| *T*_{*SA,*2} *= T_{Q}* · *X_{K}^{T}* | 0 | (4f) |
| ${T}_{SA , 3} = {f}_{softmax} \left(\frac{{T}_{SA , 2}}{\sqrt{{h}_{1}}}\right)$ | 0 | (4g) |
| *T_{V}* = *T*_{*SA,*1} · *W_{V}* | 0 | (4h) |
| *X_{V}* ← concat(*X_{V}*, *T_{V}*) | 0 | (4i) |
| *T*_{*SA,*4} = *T*_{*SA,*3} · *X_{V}* | 0 | (4j) |
| *T*_{*SA,*5} = concatHeads(*T*_{*SA*,4}) | 0 | (4k) |
| *T*_{*SA*,6} = gather(*T*_{*SA*,5}) | 2 *· b · h*₁ | (4l) |
| *T*_{*SA,*7} = *T*_{*SA,*6} · *Wₒ* | 0 | (4m) |
| *T*_{*SA*,output} = *T*_{*SA,*7} + *T*_{*SA*,input} | 0 | (4n) |

**Table 2:**

| **Equation** | **Bytes transferred** | |
|---|---|---|
| *T*_{*MLP*,input} = gather(T_{*SA*,output}) | 2 *· b · h*₁ | (5a) |
| *T*_{*MLP,*1} = normalize(*T*_{*MLP*,input}) | 0 | (5b) |
| *T*_{*MLP,*2} = *T*_{*MLP,*1} · *W*₁ | 0 | (5c) |
| *T*_{*MLP,*3} = *f*ᵣₑₗᵤ(*T*_{*MLP*,2}) | 0 | (5d) |
| *T*_{*MLP,*4} = gather(*T*_{*MLP*,3}) | 2 *· b · h*₂ | (5e) |
| *T*_{*MLP,*5} = *T*_{*MLP,*4 ·} *W*₂ | 0 | (5f) |
| *T*_{*MLP*,output} = *T*_{*MLP,*5} + *T*_{*MLP,*input} | 0 | (5g) |

The generative model may include a plurality of transformer layers, and each transformer layer may include an attention sublayer and an MLP sublayer. The electronic device may process the plurality of transformer layers sequentially. For example, the electronic device may sequentially process the attention sublayer and the MLP sublayer of each transformer layer. For example, the electronic device may execute a previous attention sublayer and a previous MLP sublayer of a previous transformer layer, and in response to executing the previous attention sublayer and the previous MLP sublayer, process a current attention sublayer and a current MLP sublayer of a current transformer layer.

Table 1 and Table 2 may represent the processing process of a current attention sublayer and a current MLP sublayer. The electronic device may generate an attention output tensor T_{SA,output} of a current attention sublayer by processing the current attention sublayer, and generate an MLP output tensor T_{MLP,output} of a current MLP sublayer by processing the current MLP sublayer based on the attention output tensor T_{SA,output} of the current attention sublayer.

For example, in computation stages 5f and 5g of Table 2, the electronic device may independently generate a first partial MLP output tensor (e.g., a portion of the MLP output tensor T_{MLP,output} of the previous MLP sublayer) and a second partial MLP output tensor (e.g., the remaining portion of the MLP output tensor T_{MLP,output} of the previous MLP sublayer) of a previous MLP sublayer by the first processing group and the second processing group without communication between the first processing group and the second processing group. In a computation stage 4a of Table 1, the electronic device may generate an attention input tensor of the current attention sublayer of the generative model (e.g., the attention input tensor T_{SA,input} of the current attention sublayer) by merging (e.g., performing a gather operation) the first partial MLP output tensor and the second partial MLP output tensor by the first processing group and the second processing group based on the communication between the first processing group and the second processing group.

In computation stages 4b to 4k of Table 1, the electronic device may independently generate a first partial attention score tensor (e.g., a portion of an attention score tensor *T*_{*SA,*5} of the current attention sublayer) and a second partial attention score tensor (e.g., the remaining portion of the attention score tensor *T*_{*SA,*5} of the current attention sublayer) of the current attention sublayer based on the attention input tensor and first subtensors by the first processing group and the second processing group without communication between the first processing group and the second processing group. The first processing group may generate the first partial MLP output tensor and the first partial attention score tensor, and the second processing group may generate the second partial MLP output tensor and the second partial attention score tensor.

The attention sublayer may have a structure for multi-head attention. The electronic device may determine first subtensors among subtensors by dividing first tensors among the tensors according to an attention head dimension representing a dimension of a head direction of multi-head attention of the generative model. The first tensors may include tensors (e.g., a query weight W_{Q}, a key weight W_{K}, a value weight W_{V}, a key tensor sequence X_{K}, and a value tensor sequence X_{V}) used to derive the attention score tensor T_{SA,5}. Independent parallel processing between the first processing group and the second processing group may be optimized in the computation stages 4b to 4k through tensor dividing based on the attention head dimension.

In a computation stage 4l of Table 1, the electronic device may generate the attention score tensor T_{SA,5} of the current attention sublayer by merging (e.g., a gather operation) a first partial attention score tensor (e.g., a portion of the attention score tensor T_{SA,5} of the current attention sublayer) and a second partial attention score tensor (e.g., the remaining portion of the attention score tensor T_{SA,5} of the current attention sublayer) by the first processing group and the second processing group based on the communication between the first processing group and the second processing group, and independently generate a first partial attention output tensor (e.g., a portion of the attention output tensor T_{SA,output} of the current attention sublayer) and a second partial attention output tensor (e.g., the remaining portion of the attention score tensor T_{SA,output} of the current attention sublayer) based on the attention score tensor T_{SA,5} and second subtensors by the first processing group and the second processing group without the communication between the first processing group and the second processing group. The first processing group may generate the first partial attention output tensor, and the second processing group may generate the second partial attention output tensor.

The electronic device may determine the second subtensors among the subtensors by dividing second tensors among the tensors according to a dimension of a column direction among a dimension of a row direction and the dimension of the column direction of the second tensors. The second tensors may include an attention output weight Wₒ of the attention sublayer and MLP weights W₁, W₂ of the MLP sublayer. The independent parallel processing between the first processing group and the second processing group may be optimized in computation stages 4m, 4n, 5b to 5d, 5f, and 5g through the tensor dividing based on the column direction.

The computation stages 5a to 5g of Table 2 may also be performed similarly to the computation stages 4a to 4n of Table 1.

The computation stages 4a, 4l, 5a, and 5e may be determined to be performed with the communication between the first processing group and the second processing group. In other words, the computation stages 4a, 4l, 5a, and 5e may have communication dependencies. The communication amount may be 2*b*h1, where b represents a batch size and h1 represents a dimension of a head direction of a tensor (e.g., the MLP output tensor T_{MLP,output}, the attention score tensor T_{SA,5}). The first processing group and the second processing group may process the computation stages 4a, 4l, 5a, and 5e based on the communication between the first processing group and the second processing group. The computation stages 4b to 4k, 4m, 4n, 5b to 5d, 5f, and 5g may be determined to be performed without the communication between the first processing group and the second processing group. The first processing group and the second processing group may process the computation stages 4b to 4k using the first subtensors and process the computation stages 4m, 4n, 5b to 5d, 5f, and 5g using the second subtensors without the communication between the first processing group and the second processing group.

According to an example, the electronic device may place the subtensors in the first memory pool of the first processing group and the second memory pool of the second processing group based on the task ratio. For example, the electronic device may place the first subtensors in the first memory pool and the second memory pool by dividing the first subtensors according to a first task ratio (e.g., r_{SA,C}:r_{SA,G}), and place the second subtensors in the first memory pool and the second memory pool by dividing the second subtensors according to a second task ratio (e.g., r_{MLP,C}:r_{MLP:G}). For example, when the number of heads of the multi-attention head of the generative model is nₕ, the electronic device may place subtensors corresponding to r_{SA,C}*nₕ heads among the first subtensors in the first memory pool, and place subtensors corresponding to the remaining r_{SA,G}*nₕ heads in the second memory pool.

Referring to FIG. 6, the electronic device may divide tensors 610 into subtensors 620, place one or more of the subtensors 620 (e.g., subtensors of a head 1 to a head m-1) in a first processing group 650, and place the remaining subtensors 620 (e.g., subtensors of a head m to a last head) in a second processing group 660. For example, the electronic device may divide a query weight 611 into subtensors (e.g., W_{Q,1}, W_{Q,2}, . . . , W_{Q,m}, W_{Q,m+1}, . . . , etc.), divide a key weight 612 into subtensors (e.g., W_{K,1}, W_{K,2}, . . . , W_{K,m}, W_{K,m+1}, . . . , etc.), and divide a value weight 613 into subtensors (e.g., W_{V,1}, W_{V,2}, . . . , W_{V,m}, W_{V,m+1}, ... , etc.). The tensors 610 may be first tensors, and the subtensors 620 may be first subtensors. The electronic device may obtain the first subtensors by dividing the first tensors according to an attention head dimension representing a dimension of a head direction of the multi-head attention of the generative model.

Referring to FIG. 7, the electronic device may divide a tensor 710 into subtensors 720, place one or more of the subtensors 720 (e.g., a weight W_{C}) in a first processing group 750, and place the remaining subtensors 720 (e.g., a weight W_{G}) in a second processing group 760. The tensors 710 may be second tensors, and the subtensors 720 may be second subtensors. The electronic device may obtain the second subtensors by dividing the second tensors according to a dimension of a column direction among a dimension of a row direction and the dimension of the column direction of the second tensors. A dividing direction 701 may represent the column direction.

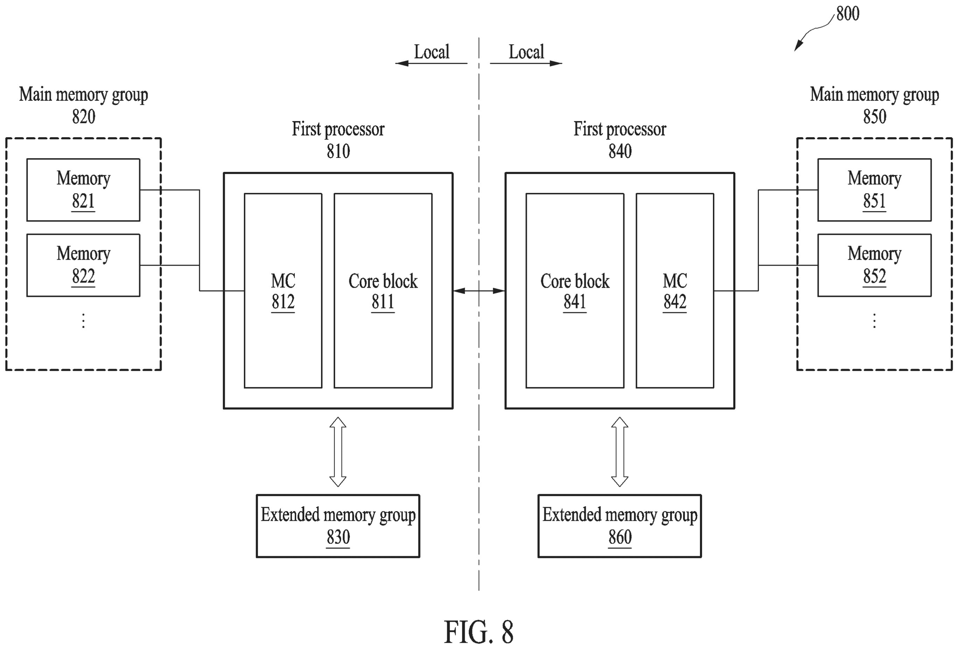

FIG. 8 illustrates an example of a processing structure of a first processing group according to one or more embodiments. Referring to FIG. 8, an electronic device 800 may include first processors 810 and 840, main memory groups 820 and 850, and extended memory groups 830 and 860. The first processors 810 and 840 may form a first processing group, and the main memory groups 820 and 850 and the extended memory groups 830 and 860 may form a first memory pool.

The first processor 810 may include a core block 811 including a plurality of cores and one or more memory controllers (MCs) 812, and the first processor 840 may include a core block 841 and one or more MCs 842. The MCs 812 may control the main memory group 820, and MCs 842 may control the main memory group 850. The main memory group 820 may include memories 821 and 822, and the main memory group 850 may include memories 851 and 852. The first processor 810 may be connected to the extended memory group 830, and the first processor 840 may be connected to the extended memory group 860.

The main memory group 820 and/or the extended memory group 830 may be positioned in a local area of the first processor 810 and may correspond to a local memory of the first processor 810. The main memory group 850 and/or the extended memory group 860 may be positioned in a local area of the first processor 840 and may correspond to a local memory of the first processor 840.

The first processors 810 and 840 may each correspond to a first processing node. The main memory groups 820 and 850 and the extended memory groups 830 and 860 may each correspond to the first memory node. The memories 821, 822, 851, and 852 may include a DRAM, and the extended memory groups 830 and 860 may include a CXL memory, but examples are not limited thereto.

According to an example, each of the first processors 810 and 840 may include a plurality MCs. Each MC may have a sub-nonuniform memory access (sub-NUMA) clustering (SNC) node. For example, when the first processors 810 and 840 each include p MCs, the main memory group connected to each MC of the first processors 810 and 840 may form an SNC node. In this case, each of the first processors 810 and 840 may have p SNC nodes. Each SNC node may be matched with cores physically located close to the memories connected through the MC of the corresponding SNC node.

According to an example, the number of first processors of the electronic device 800 may be n_{C}, the number of SNC nodes of each first processor may be n_{SNC}, and the number of attention heads may be nₕ. The electronic device 800 may place subtensors corresponding to r_{SA,C}*nₕ heads among the first subtensors in the first memory pool, and place subtensors corresponding to the remaining r_{SA,G}*nₕ heads in a second memory pool. When placing the subtensors corresponding to the r_{SA,C}*nₕ heads among the first subtensors in the first memory pool, the electronic device 800 may place subtensors corresponding to (r_{SA,C}*nₕ)/(n_{C}*n_{SNC}) attention heads in the corresponding SNC node.

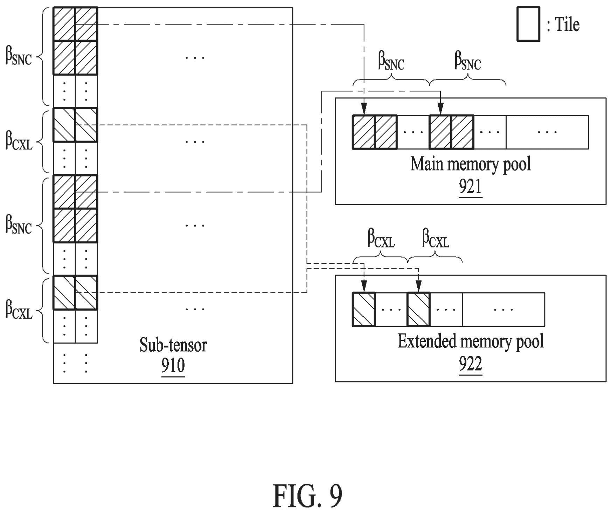

FIG. 9 illustrates an example of an operation of placing a subtensor in heterogeneous memory pools according to one or more embodiments. Referring to FIG. 9, an electronic device may place a subtensor 910 in a main memory pool 921 and an extended memory pool 922. For example, the subtensor 910 may be a subtensor placed in a first memory pool among the subtensors. The main memory pool 921 may be a memory pool of a main memory group, and the extended memory pool 922 may be a memory pool of an extended memory group. For example, the main memory pool 921 may include a DRAM, and the extended memory pool 922 may include a CXL memory, but examples are not limited thereto.

According to an example, a first processor may provide an extension function for improving performance of machine learning workloads. For example, the first processor may support operations and memory access in the unit of tiles. The electronic device may place the subtensor 910 in the main memory pool 921 and/or the extended memory pool 922 in the unit of tiles smaller than pages. For example, a page may be 4 kilobytes (KB) in size, and a tile unit may be 1 KB, but examples are not limited thereto.

According to an example, the electronic device may perform fine-grained placement of the subtensors based on locality and/or heterogeneity. According to an example, the electronic device may place the subtensor 910 in the main memory pool 921 and/or the extended memory pool 922 by considering the locality. For example, the electronic device may place the subtensor 910 in a memory node in the local area of the first processor.

According to an example, the electronic device may place the subtensors 910 in the main memory pool 921 and the extended memory pool 922 based on the heterogeneity. For example, the main memory pool 921 may have a first bandwidth and the extended memory pool 922 may have a second bandwidth. The electronic device may place the subtensor 910 in the main memory pool 921 and the extended memory pool 922 based on a ratio between the first bandwidth and the second bandwidth. For example, when the ratio between the first bandwidth and the second bandwidth is β_{SNC}:β_{CXL}, the electronic device may place the subtensors in the memory node having the first bandwidth and the memory node having the second bandwidth at the ratio of β_{SNC}:β_{CXL}. For example, the electronic device may place the subtensor 910 in the main memory pool 921 and the extended memory pool 922 in the unit of tiles. For example, a ratio between the number of tiles placed in the main memory pool 921 and the number of tiles placed in the extended memory pool 922 may be β_{SNC}:β_{CXL}.

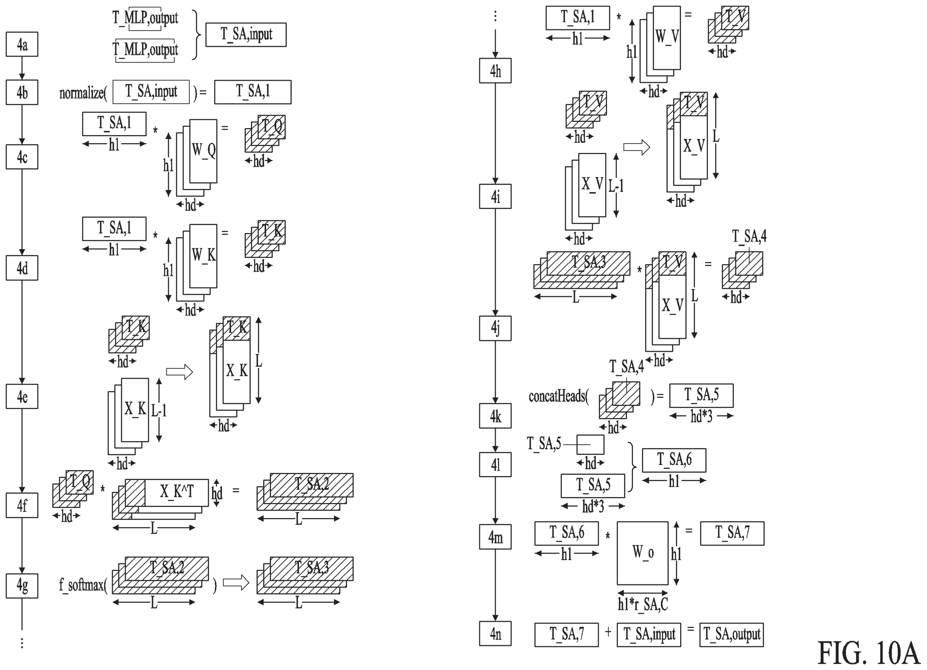

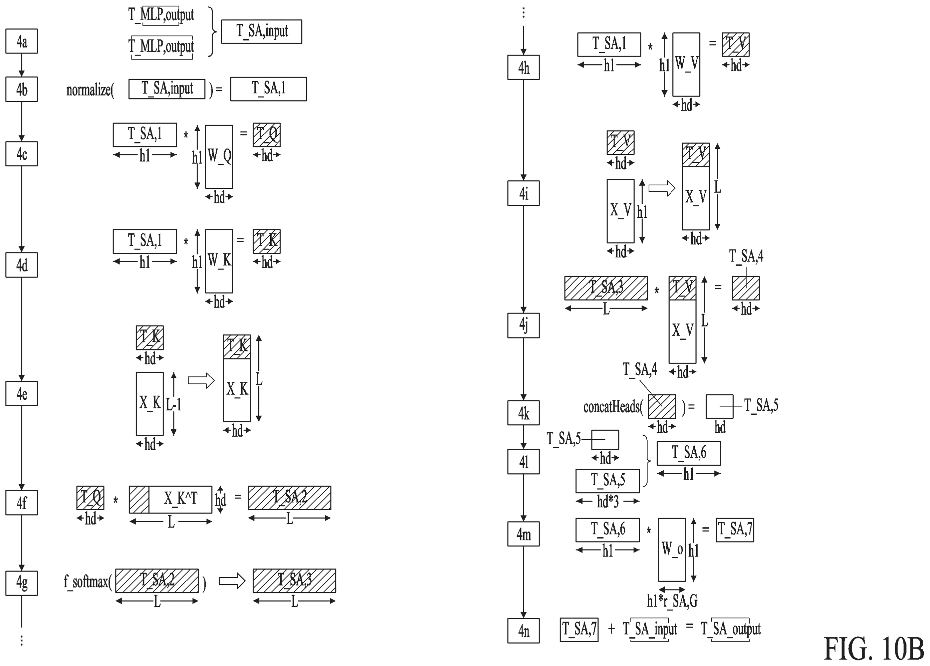

FIG. 10A illustrates an example of a process in which an attention sublayer is processed by a first processing group according to one or more embodiments, and FIG. 10B illustrates an example of a process in which an attention sublayer is processed by a second processing group according to one or more embodiments. The processing processes of FIGS. 10A and 10B may correspond to the computation stages 4a to 4n related to the attention sublayer of Table 1.

Referring to FIG. 10A, in the computation stage 4a, the first processing group may generate an attention input tensor T_SA,input of a current attention sublayer by merging (e.g., a gather operation) a first partial MLP output tensor T_MLP,output of a previous MLP sublayer generated by the first processing group and a second partial MLP output tensor T_MLP,output of a previous MLP sublayer generated by the second processing group. In the computation stage 4b, the first processing group may generate a first attention intermediate tensor T_SA,1 by normalizing the attention input tensor T_SA,input.

In the computation stage 4c, the first processing group may generate a query tensor T_Q by performing a matrix multiplication operation between the first attention intermediate tensor T_SA,1 and a query weight W_Q. A dimension of the first attention intermediate tensor T_SA,1 may be h1*1*1, a dimension of the query weight W_Q may be hd*h1*3, and a dimension of the query tensor T_Q may be hd*1*3. hd may represent the attention head dimension, and h1 may represent an attention hidden dimension. When the number of attention heads is nh, h1 may be hd*nh.

In the examples of FIGS. 10A and 10B, the query weight W_Q may be a first subtensor. In the examples of FIGS. 10A and 10B, the dimension of all tensors of the query weight W_Q may be hd*h1*4, and a first task ratio (e.g., r_SA,C:r_SA,G) may be 3:1. Based on the first task ratio, a first subtensor of hd*h1*3 may be distributed to the first processing group, and a first subtensor of hd*h1*1 may be distributed to the second processing group.

In the computation stage 4d, the first processing group may generate a key tensor T_K by performing a matrix multiplication operation between the first attention intermediate tensor T_SA, 1 and a key weight W_K. The dimension of the first attention intermediate tensor may be h1*1*1, a dimension of the key weight W_K may be hd*h1*3, and a dimension of the key tensor T_K may be hd*1*3. Like the query weight W_Q, the key weight W_K may also be the first subtensor.

In the computation stage 4e, the first processing group may generate a current key tensor sequence X_K by concatenating a previous key tensor sequence X_K and the key tensor T_K. A dimension of the previous key tensor sequence X_K may be hd*L-1*3, and a dimension of the current key tensor sequence X_K may be hd*L*3.

In the computation stage 4f, the first processing group may generate a second attention intermediate tensor T_SA,2 by performing a matrix multiplication operation between the query tensor T_Q and a transposed tensor of the current key tensor sequence X_K. In the computation stage 4g, the first processing group may generate a third attention intermediate tensor T_SA,3 by inputting the second attention intermediate tensor T_SA,2 into a softmax function.

In the computation stage 4h, the first processing group may generate a value tensor T_V by performing a matrix multiplication operation between the first attention intermediate tensor T_SA,1 and a value weight W_V. The dimension of the first attention intermediate tensor may be h1*1*1, a dimension of the value weight W_V may be hd*h1*3, and a dimension of the value tensor T_V may be hd*1*3. Like the query weight W_Q and the key weight W_K, the value weight W_V may also be the first subtensor.

In the computation stage 4i, the first processing group may generate a current value tensor sequence X_V by concatenating a previous value tensor sequence X_V and the value tensor T_V. A dimension of the previous value tensor sequence X_V may be hd*L-1*3, and a dimension of the current value tensor sequence X_V may be hd*L*3.

In the computation stage 4j, the first processing group may generate a fourth attention intermediate tensor T_SA,4 by performing a matrix multiplication operation between the third attention intermediate tensor T_SA,3 and the current value tensor sequence X_V. In the computation stage 4k, the first processing group may generate a fifth attention intermediate tensor T_SA,5 by concatenating the fourth attention intermediate tensor T_SA,4. The fifth attention intermediate tensor T_SA,5 may be a first partial attention score tensor.

In the computation stage 4l, the first processing group may generate a sixth attention intermediate tensor T_SA,6 by merging (e.g., a gather operation) the fifth attention intermediate tensor T_SA,5 generated by the first processing group and the fifth attention intermediate tensor T_SA,5 generated by the second processing group.

In the computation stage 4m, the first processing group may generate a seventh attention intermediate tensor T_SA,7 by performing a matrix multiplication operation between the sixth attention intermediate tensor T_SA,6 and an attention output weight W_o. A dimension of the attention output weight W_o may be (h1*r_SA,C)*h1*1.

In the examples of FIGS. 10A and 10B, the attention output weight W_o may be a second subtensor. In the examples of FIGS. 10A and 10B, the dimension of all tensors of the attention output weight W_o may be h1*h1*1, and a first task ratio (e.g., r_SA,C:r_SA,G) may be 3:1. Based on the first task ratio, a second subtensor of h1*(h1*r_SA,C)*1 may be distributed to the first processing group, and a second subtensor of h1*(h1*r_SA,G)*1 may be distributed to the second processing group.

In the computation stage 4n, the first processing group may generate an attention output tensor T_SA,output of a current attention sublayer by merging the seventh attention intermediate tensor T_SA,7 and the attention input tensor T_SA,input of the current attention sublayer. Here, the attention output tensor T_SA, output may be a first partial attention output tensor.

Referring to FIG. 10B, in the computation stage 4a, the second processing group may generate an attention input tensor T_SA,input of a current attention sublayer by merging (e.g., a gather operation) a first partial MLP output tensor T_MLP,output of a previous MLP sublayer generated by the first processing group and a second partial MLP output tensor T_MLP,output of a previous MLP sublayer generated by the second processing group. In the computation stage 4b, the second processing group may generate a first attention intermediate tensor T_SA,1 by normalizing the attention input tensor T_SA,input.

In the computation stage 4c, the second processing group may generate a query tensor T_Q by performing a matrix multiplication operation between the first attention intermediate tensor T_SA,1 and a query weight W_Q. A dimension of the first attention intermediate tensor T_SA,1 may be h1*1*1, a dimension of the query weight W_Q may be hd*h1*1, and a dimension of the query tensor T_Q may be hd*1*1. hd may represent the attention head dimension, and h1 may represent an attention hidden dimension. When the number of attention heads is nh, h1 may be hd*nh.

In the examples of FIGS. 10A and 10B, the query weight W_Q may be a first subtensor. In the examples of FIGS. 10A and 10B, the dimension of all tensors of the query weight W_Q may be hd*h1*4, and a first task ratio (e.g., r_SA,C:r_SA,G) may be 3:1. Based on the first task ratio, a first subtensor of hd*h1*3 may be distributed to the first processing group, and a first subtensor of hd*h1*1 may be distributed to the second processing group.

In the computation stage 4d, the second processing group may generate a key tensor T_K by performing a matrix multiplication operation between the first attention intermediate tensor T_SA,1 and a key weight W_K. The dimension of the first attention intermediate tensor may be h1*1*1, a dimension of the key weight W_K may be hd*h1*1, and a dimension of the key tensor T_K may be hd*1*1. Like the query weight W_Q, the key weight W_K may also be the first subtensor.

In the computation stage 4e, the second processing group may generate a current key tensor sequence X_K by concatenating a previous key tensor sequence X_K and the key tensor T_K. A dimension of the previous key tensor sequence X_K may be hd*L-1*1, and a dimension of the current key tensor sequence X_K may be hd*L*1.

In the computation stage 4f, the second processing group may generate a second attention intermediate tensor T_SA,2 by performing a matrix multiplication operation between the query tensor T_Q and a transposed tensor of the current key tensor sequence X_K. In the computation stage 4g, the second processing group may generate a third attention intermediate tensor T_SA,3 by inputting the second attention intermediate tensor T_SA,2 into a softmax function.

In the computation stage 4h, the second processing group may generate a value tensor T_V by performing a matrix multiplication operation between the first attention intermediate tensor T_SA,1 and a value weight W_V. The dimension of the first attention intermediate tensor may be h1*1*1, a dimension of the value weight W_V may be hd*h1*1, and a dimension of the value tensor T_V may be hd*1*1. Like the query weight W_Q and the key weight W_K, the value weight W_V may also be the first subtensor.

In the computation stage 4i, the second processing group may generate a current value tensor sequence X_V by concatenating a previous value tensor sequence X_V and the value tensor T_V. A dimension of the previous value tensor sequence X_V may be hd*L-1*1, and a dimension of the current value tensor sequence X_V may be hd*L*1.

In the computation stage 4j, the second processing group may generate a fourth attention intermediate tensor T_SA,4 by performing a matrix multiplication operation between the third attention intermediate tensor T_SA,3 and the current value tensor sequence X_V. In the computation stage 4k, the second processing group may generate a fifth attention intermediate tensor T_SA,5 by concatenating the fourth attention intermediate tensor T_SA,4. The fifth attention intermediate tensor T_SA,5 may be a second partial attention score tensor.

In the computation stage 4l, the second processing group may generate a sixth attention intermediate tensor T_SA,6 by merging (e.g., a gather operation) the fifth attention intermediate tensor T_SA,5 generated by the second processing group and the fifth attention intermediate tensor T_SA,5 generated by the first processing group.

In the computation stage 4m, the second processing group may generate a seventh attention intermediate tensor T_SA,7 by performing a matrix multiplication operation between the sixth attention intermediate tensor T_SA,6 and an attention output weight W_o. The dimension of the attention output weight W_o may be (h1*r_SA,G)*h1*1.

In the examples of FIGS. 10A and 10B, the attention output weight W_o may be a second subtensor. In the examples of FIGS. 10A and 10B, the dimension of all tensors of the attention output weight W_o may be h1*h1*1, and a first task ratio (e.g., r_SA,C:r_SA,G) may be 3:1. Based on the first task ratio, a second subtensor of h1*(h1*r_SA,C)*1 may be distributed to the second processing group, and a second subtensor of h1*(h1*r_SA,G)*1 may be distributed to the first processing group.

In the computation stage 4n, the second processing group may generate an attention output tensor T_SA,output of a current attention sublayer by merging the seventh attention intermediate tensor T_SA,7 and the attention input tensor T_SA,input of the current attention sublayer. Here, the attention output tensor T_SA,output may be a second partial attention output tensor.

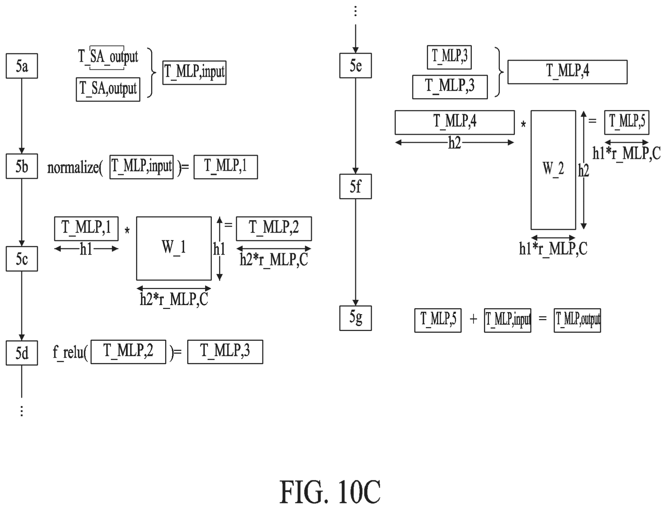

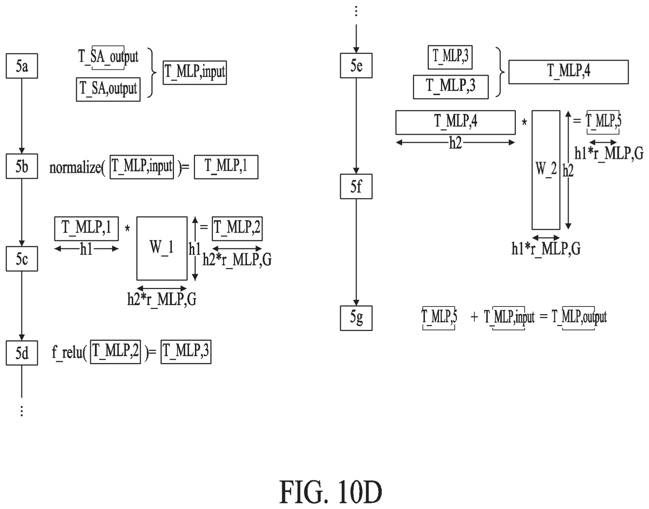

FIG. 10C illustrates an example of a process in which an MLP sublayer is processed by a first processing group according to one or more embodiments, and FIG. 10D illustrates an example of a process in which an MLP sublayer is processed by a second processing group according to one or more embodiments. The processing processes of FIGS. 10C and 10D may correspond to the computation stages 5a to 5g related to the MLP sublayer of Table 2.

Referring to FIG. 10C, in the computation stage 5a, the first processing group may generate an MLP input tensor T_MLP,input of a current MLP sublayer by merging (e.g., a gather operation) a first partial attention output tensor T_SA,output of a current attention sublayer generated by the first processing group and a second partial attention output tensor T_SA,output of a current attention sublayer generated by the second processing group. In the computation stage 5b, the first processing group may generate a first MLP intermediate tensor T_MLP,1 by normalizing the MLP input tensor T_MLP,input.

In the computation stage 5c, the first processing group may generate a second MLP intermediate tensor T_MLP,2 by performing a matrix multiplication operation between the first MLP intermediate tensor T_MLP,1 and an MLP weight W_1. A dimension of the first MLP intermediate tensor T_MLP,1 may be h1*1*1, a dimension of the MLP weight W_1 may be h2*r_MLP,C*h1*1, and a dimension of the second MLP intermediate tensor T_MLP,2 may be (h2*r_MLP,C)*1*1. h2 may represent an MLP hidden dimension.

In the examples of FIGS. 10C and 10D, the MLP weight W_1 may be a second subtensor. In the examples of FIGS. 10C and 10D, the dimension of all tensors of the MLP weight W_1 may be h2*h1*1. Based on a second task ratio (e.g., r_MLP,C:r_MLP,G), a second subtensor of (h2*r_MLP,C)*h1*1 may be distributed to the first processing group, and a second subtensor of (h2*r_MLP,G)*h1*1 may be distributed to the second processing group.

In the computation stage 5b, the first processing group may generate a third MLP intermediate tensor T_MLP,3 by inputting the second MLP intermediate tensor T_MLP,2 to a relu function.

In the computation stage 5e, the first processing group may generate a fourth MLP intermediate tensor T_MLP,4 by merging (e.g., a gather operation) the third MLP intermediate tensor T_MLP,3 generated by the first processing group and the third MLP intermediate tensor T_MLP,3 generated by the second processing group.

In the computation stage 5f, the first processing group may generate a fifth MLP intermediate tensor T_MLP,5 by performing a matrix multiplication operation between the fourth MLP intermediate tensor T_MLP,4 and an MLP weight W_2. A dimension of the MLP weight W_2 may be (h1*r_MLP,C)*h2*1. Like the MLP weight W_1, the MLP weight W_2 may also be a second subtensor.

In the computation stage 5g, the first processing group may generate an MLP output tensor T_MLP, output of the current MLP sublayer by merging the fifth MLP intermediate tensor T_MLP,5 and the MLP input tensor T_MLP,input of the current MLP sublayer. Here, the MLP output tensor T_MLP, output may be the first partial MLP output tensor.

Referring to FIG. 10D, in the computation stage 5a, the second processing group may generate an MLP input tensor T_MLP,input of a current MLP sublayer by merging (e.g., a gather operation) a first partial attention output tensor T_SA,output of a current attention sublayer generated by the first processing group and a second partial attention output tensor T_SA,output of a current attention sublayer generated by the second processing group. In the computation stage 5b, the second processing group may generate a first MLP intermediate tensor T_MLP,1 by normalizing the MLP input tensor T_MLP, input.

In the computation stage 5c, the second processing group may generate a second MLP intermediate tensor T_MLP,2 by performing a matrix multiplication operation between the first MLP intermediate tensor T_MLP,1 and the MLP weight W_1. The dimension of the first MLP intermediate tensor T_MLP,1 may be h1*1*1, the dimension of the MLP weight W_1 may be h2*r_MLP,G*h1*1, and the dimension of the second MLP intermediate tensor T_MLP,2 may be (h2*r_MLP,G)*1*1.

In the examples of FIGS. 10C and 10D, the MLP weight W_1 may be a second subtensor. In the examples of FIGS. 10C and 10D, the dimension of all tensors of the MLP weight W_1 may be h2*h1*1. Based on a second task ratio (e.g., r_MLP,C:r_MLP,G), a second subtensor of (h2*r_MLP,C)*h1*1 may be distributed to the first processing group, and a second subtensor of (h2*r_MLP,G)*h1*1 may be distributed to the second processing group.

In the computation stage 5b, the second processing group may generate a third MLP intermediate tensor T_MLP,3 by inputting the second MLP intermediate tensor T_MLP,2 to a relu function.

In the computation stage 5e, the second processing group may generate a fourth MLP intermediate tensor T_MLP,4 by merging (e.g., a gather operation) the third MLP intermediate tensor T_MLP,3 generated by the first processing group and the third MLP intermediate tensor T_MLP,3 generated by the second processing group.

In the computation stage 5f, the second processing group may generate a fifth MLP intermediate tensor T_MLP,5 by performing a matrix multiplication operation between the fourth MLP intermediate tensor T_MLP,4 and the MLP weight W_2. The dimension of the MLP weight W_2 may be (h1*r_MLP,G)*h2*1. Like the MLP weight W_1, the MLP weight W_2 may also be a second subtensor.

In the computation stage 5g, the second processing group may generate an MLP output tensor T_MLP, output of the current MLP sublayer by merging the fifth MLP intermediate tensor T_MLP,5 and the MLP input tensor T_MLP,input of the current MLP sublayer. Here, the MLP output tensor T_MLP, output may be the second partial MLP output tensor.

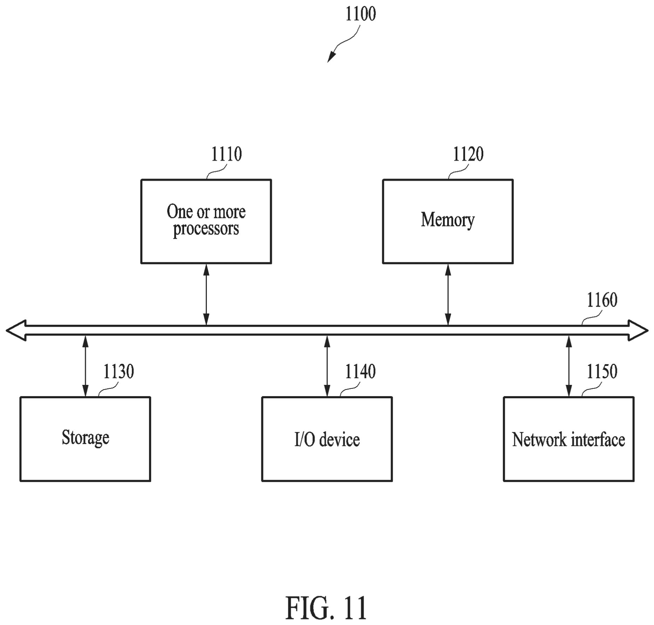

FIG. 11 illustrates an example of a configuration of an electronic device according to one or more embodiments. Referring to FIG. 11, an electronic device 1100 may include one or more processors 1110, a memory 1120, a storage 1130, an input/output (I/O) device 1140, and a network interface 1150. These components may communicate with each other via a communication bus 1160. For example, the electronic device 1200 may be implemented as at least a portion of, for example, a mobile device such as a mobile phone, a smartphone, a personal digital assistant (PDA), a netbook, a tablet computer, and a laptop computer, a wearable device such as a smartwatch, a smart band, and smart glasses, and/or a computing device such as a desktop and a server.

The one or more processors 1110 may execute instructions stored in the memory 1120 or the storage 1130. When executed by the one or more processors 1110, the instructions may cause the electronic device 1100 to perform the operations described with reference to FIGS. 1 to 10. For example, the one or more processors 1110 may include a first processing group and a second processing group, and the instructions may be executed by one or more first processors of the first processing group.

The memory 1120 may include a computer-readable storage medium or a computer-readable storage device. The memory 1120 may store instructions to be executed by the one or more processors 1110 and may store related information while software and/or an application is being executed by the electronic device 1100. For example, the memory 1120 may be or include a non-transitory computer-readable storage medium storing instructions that, when executed by the one or more processors 1110, configure the one or more processors 1110 to perform any one, any combination, or all of the operations and/or methods described herein with reference to FIGS. 1-11. For example, the memory 1120 may correspond to a first memory pool. A second memory pool may include a memory of the second processing group of the one or more processors 1110.

The storage 1130 may include a non-transitory computer-readable storage medium or a non-transitory computer-readable storage device. The storage 1130 may store a greater amount of information than the memory 1120 for a longer period of time. For example, the storage 1130 may include a magnetic hard disk, an optical disc, a flash memory, a floppy disk, and/or any other form of non-volatile memory known in the art.

The I/O device 1140 may receive an input from a user in traditional input manners through a keyboard and a mouse, and in new input manners, such as a touch input, a voice input, and an image input. For example, the I/O device 1140 may include a keyboard, a mouse, a touch screen, a microphone, and/or any other device that detects the input from the user and transmits the detected input to the electronic device 1100. The I/O device 1140 may provide an output of the electronic device 1100 to the user through a visual, auditory, and/or haptic channel. The I/O device 1140 may include, for example, a display, a touch screen, a speaker, a vibration generator, and/or any other device that provides the output to the user. The network interface 1150 may communicate with an external device through a wired or wireless network.

The electronic devices, first processing groups, first memory pools, second processing groups, second memory pools, first processors, main memory groups, extended memory groups, core blocks, MCs, memories, main memory pools, extended memory pools, processors, storages, I/O devices, network interfaces, communication buses, electronic device 100, first processing group 111, first memory pool 112, second processing group 121, second memory pool 122, first processing group 511, first memory pool 512, second processing group 521, second memory pool 522, first processing group 650, second processing group 660, first processing group 750, second processing group 760, electronic device 800, first processors 810 and 840, main memory groups 820 and 850, extended memory groups 830 and 860, core block 811, MCs 812, memories 821 and 822, core block 841, MCs 842, memories 851 and 852, main memory pool 921, extended memory pool 922, electronic device 1100, one or more processors 1110, memory 1120, storage 1130, I/O device 1140, network interface 1150, and communication bus 1160, including descriptions with respect to respect to FIGS. 1-11, are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit (ALU), a digital signal processor (DSP), a microcomputer, a programmable logic controller, a field-programmable gate array (FPGA), a programmable logic array (PLU), a microprocessor, or any other device or combination of devices that is configured to respond to and execute instructions (e.g., code or coding) in a defined manner to achieve a desired result. In one example, a processor or computer includes, or is connected to, one or more memories storing the instructions or software that are executed by the processor or computer. Hardware components implemented by a processor or computer may execute the instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both, and thus while some references may be made to a singular processor or computer, such references also are intended to refer to multiple processors or computers. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing. Thus, references to a processor herein mean processing circuitry (e.g., circuitry that includes one or more processing element(s) circuits). One or more processors comprising processing circuitry also refers to each processor comprising processing circuitry, as well as some or all of the one or more processors comprising the same processing circuitry. **In** addition, processors(s) and controller(s), as a non-limiting example, do not mean human processing or human control, but rather, refer to hardware components as described herein, as non-limiting examples.

The methods illustrated in, and discussed with respect to, FIGS. 1-11 that perform the operations described in this application are performed by computing hardware, for example, by one or more processors or computers, implemented as described above implementing the instructions (e.g., computer or processor/processing device readable instructions) or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations. References to a processor, or one or more processors, as a non-limiting example, configured to perform two or more operations refers to a processor or two or more processors being configured to collectively perform all of the two or more operations, as well as a configuration with the two or more processors respectively performing any corresponding one of the two or more operations (e.g., with a respective one or more processors being configured to perform each of the two or more operations, or any respective combination of one or more processors being configured to perform any respective combination of the two or more operations). Likewise, a reference to a processor-implemented method is a reference to a method that is performed by one or more processors or other processing or computing hardware of a device or system.

The instructions or software to control computing hardware, for example, one or more processors or computers, to implement the hardware components and perform the methods as described above may be written as computer programs, code segments, or other executable instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. Thus, references herein to storage media mean storage media hardware, and does not mean transitory media, nor a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as a multimedia card or a micro card (for example, secure digital (SD) or extreme digital (XD)), magnetic tapes, floppy disks, magneto-optical data storage devices, optical data storage devices, hard disks, solid-state disks , and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is defined by the enclosed claims.

## Claims

1. A processor-implemented method comprising:
determining a task ratio between a first processing group and a second processing group for an inference task of a generative model;
generating subtensors by dividing tensors used for the inference task based on communication dependency of computation stages of the inference task;
storing the generated subtensors in a first memory pool of the first processing group and in a second memory pool of the second processing group based on the task ratio; and
performing the inference task using the stored subtensors by the first processing group and the second processing group.

2. The method of claim 1, wherein the determining of the task ratio between the first processing group and the second processing group comprises determining the task ratio based on processing performance of the first processing group and the second processing group.

3. The method of claim 1 or 2, wherein
the generative model comprises an attention sublayer and a multi-layer perceptron, MLP, sublayer, and
the task ratio comprises a first task ratio between the first processing group and the second processing group for a task corresponding to the attention sublayer, and a second task ratio between the first processing group and the second processing group for a task corresponding to the MLP sublayer.

4. The method of one of claims 1 to 3, wherein the generating of the subtensors comprises:
generating first subtensors among the subtensors by dividing first tensors among the tensors according to an attention head dimension representing a dimension of a head direction of multi-head attention of the generative model; and
generating second subtensors among the subtensors by dividing second tensors among the tensors according to a dimension of a column direction among a dimension of a row direction and the dimension of the column direction of the second tensors.

5. The method of claim 4, wherein the first tensors comprise any one or any combination of any two or more of a query weight, a key weight, a value weight, a key tensor sequence, and a value tensor sequence of an attention sublayer of the generative model, and the second tensors comprise either one or both of an output weight of the attention sublayer and a weight of a multi-layer perceptron, MLP, sublayer of the generative model, or
wherein the task ratio comprises a first task ratio between the first processing group and the second processing group for a task corresponding to the attention sublayer of the generative model, and a second task ratio between the first processing group and the second processing group for a task corresponding to a multi-layer perceptron, MLP, sublayer of the generative model, and the storing of the subtensors in the first memory pool and the second memory pool comprises: storing the first subtensors in the first memory pool and the second memory pool by dividing the first subtensors according to the first task ratio; and storing the second subtensors in the first memory pool and the second memory pool by dividing the second subtensors according to the second task ratio.

6. The method of one of claims 1 to 5, wherein the storing of the subtensors in the first memory pool and the second memory pool comprises either storing a subtensor to be processed by a first processor among a plurality of first processors of the first processing group in a first memory node positioned in a local area of the first processor among a plurality of first memory nodes of the first memory pool, or storing the subtensors in the first memory pool in a unit of tiles smaller than pages.

7. The method of one of claims 1 to 6, wherein
the first memory pool comprises a memory node having a first bandwidth and a memory node having a second bandwidth, and
the storing of the subtensors in the first memory pool and the second memory pool comprises storing the subtensors in the memory node having the first bandwidth and the memory node having the second bandwidth based on a ratio between the first bandwidth and the second bandwidth.

8. The method of one of claims 1 to 7, wherein the performing of the inference task comprises:
generating an attention output tensor of a current attention sublayer by processing the current attention sublayer of the generative model; and
generating a multi-layer perceptron, MLP, output tensor of a current MLP sublayer by processing the current MLP sublayer of the generative model based on the attention output tensor of the current attention sublayer.

9. The method of claim 8, wherein the generating of the attention output tensor of the current attention sublayer comprises:
independently generating a first partial MLP output tensor and a second partial MLP output tensor of a previous MLP sublayer of the generative model by the first processing group and the second processing group without communication between the first processing group and the second processing group;
generating an attention input tensor of the current attention sublayer of the generative model by merging the first partial MLP output tensor and the second partial MLP output tensor by the first processing group and the second processing group based on the communication between the first processing group and the second processing group; and
independently generating a first partial attention score tensor and a second partial attention score tensor of the current attention sublayer based on the attention input tensor and first subtensors by the first processing group and the second processing group without communication between the first processing group and the second processing group.

10. The method of claim 9, wherein the first subtensors are generated by dividing first tensors among the tensors according to an attention head dimension representing a dimension of a head direction of multi-head attention of the generative model.

11. The method of claim 9, further comprising:
generating an attention score tensor of the current attention sublayer by merging the first partial attention score tensor and the second partial attention score tensor by the first processing group and the second processing group based on the communication between the first processing group and the second processing group; and
independently generating a first partial attention output tensor and a second partial attention output tensor of the current attention sublayer based on the attention score tensor and second subtensors by the first processing group and the second processing group without communication between the first processing group and the second processing group,
wherein preferably the second subtensors are generated by dividing second tensors among the tensors according to a dimension of a column direction among a dimension of a row direction and the dimension of the column direction of the second tensors.

12. An electronic device comprising:
one or more processors comprising processing circuitry; and
memory comprising one or more storage media storing instructions that, when executed individually or collectively by the one or more processors, cause the electronic device to:
determine a task ratio between a first processing group and a second processing group for an inference task of a generative model;
generate subtensors by dividing tensors used for the inference task based on communication dependency of computation stages of the inference task;
store the generated subtensors in a first memory pool of the first processing group and in a second memory pool of the second processing group based on the task ratio; and
perform the inference task using the subtensors by the first processing group and the second processing group.

13. The electronic device of claim 12, wherein, for the generating of the subtensors, the execution of the instructions causes the electronic device to:
generate first subtensors among the subtensors by dividing first tensors among the tensors according to an attention head dimension representing a dimension of a head direction of multi-head attention of the generative model; and
generate second subtensors among the subtensors by dividing second tensors among the tensors according to a dimension of a column direction among a dimension of a row direction and the dimension of the column direction of the second tensors,
wherein preferably
the task ratio comprises a first task ratio between the first processing group and the second processing group for a task related to the attention sublayer of the generative model, and a second task ratio between the first processing group and the second processing group for a task related to a multi-layer perceptron, MLP, sublayer of the generative model, and
for the storing of the subtensors in the first memory pool and the second memory pool, the execution of the instructions causes the electronic device to:
store the first subtensors in the first memory pool and the second memory pool by dividing the first subtensors according to the first task ratio; and
store the second subtensors in the first memory pool and the second memory pool by dividing the second subtensors according to the second task ratio.

14. The electronic device of claim 12 or 13, wherein, for the placing storing of the subtensors in the first memory pool and the second memory pool, the execution of the instructions causes the electronic device to store a subtensor to be processed by a first processor among a plurality of first processors of the first processing group in a first memory node positioned in a local area of the first processor among a plurality of first memory nodes of the first memory pool, or
wherein the first memory pool comprises a memory node having a first bandwidth and a memory node having a second bandwidth, and for the storing of the subtensors in the first memory pool and the second memory pool, the execution of the instructions causes the electronic device to store the subtensors in the memory node having the first bandwidth and the memory node having the second bandwidth based on a ratio between the first bandwidth and the second bandwidth.

15. One or more storage media comprising instructions that, when executed by one or more processors, cause the one or more processors to perform the steps of:
generating first subtensors by dividing first tensors based on a dimension of a head direction of multi-head attention of a generative model, and storing the first subtensors in a first memory pool and a second memory pool based on a first task ratio;
generating second subtensors by dividing second tensors based on a dimension of a column direction of the second tensors, and storing the second subtensors in the first memory pool and the second memory pool based on a second task ratio; and
performing an inference task by processing the first subtensors and the second subtensors stored in the first memory pool using a first processing group and processing the first subtensors and the second subtensors stored in the second memory pool using a second processing group.
